Europäisches Patentamt

(19) European Patent Office

Office européen des brevets

(11) **EP 0 404 196 B1**

(12) **EUROPEAN PATENT SPECIFICATION**

(45) Date of publication and mention
of the grant of the patent:
**12.05.1999 Bulletin 1999/19**

(51) Int. Cl.⁶: $C04B\ 28/18$

(21) Application number: **90111923.0**

(22) Date of filing: **22.06.1990**

(54) **Material for heat and electrical insulation with a capacity of the selective absorption of electromagnetic radiation spectrum and vibration, its production process and use**

Material für Wärme- und elektrische Isolierung mit selektiver Absorptionskapazität für das Spektrum elektromagnetischer Strahlung und für Schwingungen, Verfahren zu seiner Herstellung und seine Anwendung

Matériau pour l'isolation thermique et électrique ayant une capacité d'absorption sélective d'un spectre de radiation électromagnétique et de vibrations, son procédé de fabrication et son utilisation

(84) Designated Contracting States:
**AT BE CH DE DK ES FR GB GR IT LI LU NL SE**

(30) Priority: **23.06.1989 YU 1290/89**

(43) Date of publication of application:
**27.12.1990 Bulletin 1990/52**

(73) Proprietor:
**Popovic, Vidosava, Dipl.-Ing.
YU- 11000 Belgrade (YU)**

(72) Inventor:
**Popovic, Vidosava, Dipl.-Ing.
YU- 11000 Belgrade (YU)**

(74) Representative:
**Fleuchaus, Leo, Dipl.-Ing. et al
Melchiorstrasse 42
81479 München (DE)**

(56) References cited:
EP-A- 0 262 031          WO-A-86/05918
FR-A- 2 364 872          US-A- 3 753 751

• CHEMICAL ABSTRACTS, vol. 103, no. 22, December 1985, Columbus, Ohio, US; abstract no. 182765D, 'Fiber-reinforced lightweight concrete-like products' page 298 ;column 2 ; & JP-A-60 122 764

• CHEMICAL ABSTRACTS, vol. 105, no. 4, July 1986, Columbus, Ohio, US; abstract no. 28903G, I. HAMADA: 'Method for production of calcium silicate formed body' page 305 ;column 1 ; & JP-A-6 153 141

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Technical field of Invention

The invention pertains to the field of technology for the production of heat and electrical insulation materials, resistant to high temperatures up to 1100 °C, based on calcium hydrosilicates belonging to the following classes of the International Patent Classification: C 04B 35/22 and C 01B 33/24. More specifically, the present invention pertains to a material according to the preamble of claim 1. Such a material is for example known from YU-P-553/85.

Technical problem

The technical problem solved by the invention is to provide a new material as well as its production process; said new material being resistant to temperatures up to 1100 °C, with a heat insulation capacity, having a mechanical strength of up to 32 kg/cm$^2$, the capability of selective absorption of electromagnetic waves, radiation and vibrations, good electrical resistance, water resistance, resistance to acids and frost, thermal shocks and various industrial combustion gases.

State-of-the-Art

Heat insulation materials based on calcium hydrosilicates and fibrous raw materials are already known. The commercial titles under which they are offered to the market are: Marilite 1, Monolux 40, Monolux 500, Monolite, .... Vidasil.
Furthermore it is known from WO86/05918 to obtain calcium hydrosilicate having the tobermorite structure by treating a water-based composition of line and quartz under hydro thermal conditions.
All known materials based on calcium hydrosilicates may be divided into two categories. Materials belonging to the first category are those having technical characteristics ranging in the following intervals of values:

| volume density | 600 - 850 kg/cm$^3$ |
| thermal conductivity | 0.2 - 0.35 W/m °C |
| maximum working temperature | 150 - 850 °C |
| modulus of rapture | 5 - 17 MN/m$^2$ |

Neither thermal shock resistance, nor resistance to water, vibration etc., have been registered for this first category of known substances.
The heat insulating material based on a calcium hydrosilicate manufactured under the production process described in YU patent application no. P-553/85, falls into the second category. This heat insulating material represents a new quality among products based on calcium hydrosilicates, both for its homogeneous mineral composition and for its technical properties which are, judging by their number and value, a novelty in the area of calcium hydrosilicate based materials. Its properties have extended the application of calcium hydrosilicates to fields in which, prior to its appearance, the use of such a kind of material was not thought possible.
The mechanical properties of the calcium hydrosilicates produced in accordance with YU pat. application no. P-553/85, as well as numerous other properties, such as fire resistance, have become challenging. Thus, this material has been fitted into the most diverse places and under the most diverse conditions, offering a satisfactory solution for numerous technical problems.
Applying this heat insulating material, many consumers have noted that an improvement of its mechanical strength would provide greater application possibilities. With more frequent use, stricter requirements had been set before it, in an effort to find a material that would, possibly, have the same scope of characteristics, but with increased values.
The technical characteristics of the calcium hydrosilicate material containing tobermorite having an A-axis of 1.13 nm (11.3 Å) and well-known in the present state-of-the-art which is produced in accordance with the process described in YU pat. application no. P-553/85 are as follows:

non-combustibility /JUS U1.040 and JUS U.J1.060/, volume density /ASTM C 303/ from 220 to 317.5 kg/m$^3$ -10 compression strength at 5% deformation /ASTM C 165/:

| 20°C | 600°C | 900°C |
|---|---|---|
| 1.60 MPa | 1.40 MPa | 1.22 MPa |

bending strength /ASTM C 203/ 0.91 MPa

thermal conductivity /JUS U.J5. 040/ depending on the temperatures:

| mean temperature °C | W/m K |
|---|---|
| 50 | 0,079 |
| 149 | 0,107 |
| 427 | 0,157 |

linear shrinkage at a temperature of 860°C /ASTM C 356/

| shrinkage per length | 2.0% |
|---|---|
| shrinkage per width | 2-0% |
| shrinkage per thickness | 2.15% |
| weight loss | 9.1% |

strength of bolt support /ASTM D-1037, ASTM C-656/:
transverse force of bolt arrest is 25 kg

resistance to rapid temperature changes /DIN 51068/:
resists temperature shocks 20[+]

Description of solution

The proposed material according to the invention is made by use of a new process for obtaining a calcium hydrosilicate material, resistant to high temperatures, having universal insulation qualities and a good mechanical strength, as well as resistance to thermal and other shocks.

The proposed process differs from that disclosed in YU pat. application no. 553/85. The material according to the invention represents a new member in the family of materials of this kind, with significant differences in the values of the technical characteristics.

The new process allows the production of a new material, the thermo-physical properties of which are twice as good as those pertaining to the calcium hydrosilicate produced in the process designed by the same author, and filed under YU patent application no. P-553/85. The values of other technical characteristics are also increased. Some of them that are hardly present in the calcium hydrosilicate tobermorite having an A-axis of 1.13 nm (11.3 Å) produced in accordance with YU Pat. application no. 553/85, are increased in proportion to other properties, giving the material new values in use. The difference lies in the ratio of the constituents of the process $CaO:SiO_2$, as well as in the altered concentration of additives, and in the relationship between the liquid and solid phase, in the change of temperature, i.e. of pressure at which the reaction between CaO and $SiO_2$ takes place, and in the duration of this reaction, as well as in the change of the fiber length and quantity of water used. By increasing the temperature and finding an optimum quantity of liquid in relation to the solid phase, better conditions have been obtained for a synthesis reaction of calcium hydrosilicate tobermorite having an A-axis of 1.13 nm (11.3 Å). It is interesting to note that the form of tobermorite mineral crystals in the material according to the invention is similar to that of sea corals. This crystalline form in the newly created tobermorite phase, as well as the total degree of crystallization of this phase, considerably effect the technical characteristics. An even distribution and other properties of the fibrous components should also be added to this.

Apart from these significant positive effects on the quality, the proposed process is more economical in the sense that it provides a greater degree of nominal equipment capacity exploitation, as well as of energy saving, because the pulp contains a smaller quantity of liquid phase which, besides being a part of the product, also serves as a medium for the development of the chemical synthesis of tobermorite. It is certain that these findings are not ultimate, and that each knowledge requires a verification and affirmation of its role in respect to the quality of the material.

Through the new process, a material is obtained, the technical properties of which are strictly reproductional, and are within a tolerance range equal to the scope of incoming parameters.

The process according to the invention is conducted in the following manner:

A natrium carboxymethyl cellulose solution is prepared, and is successively dosed by $Ca/OH/_2$ and quartz powder. Then, a suspension of water and fibers is added to this suspension, and mixed. The obtained pulp is poured into dies which are then subject to treatment with saturated water vapor of 11.0 - 12.5 bars, for a period of 14 to 28 hours. The material is removed from the cooled dies and is air-dried at temperatures up to 250 °C.

The process of pulp hardening until reaching the strength of the new material is the result of the following chemical reaction:

$$5 \ Ca/OH/_2 + 6 \ SiO_2 + 5.5 \ H_2O \ q/J/ \rightarrow 5 \ CaO + 6 \ SiO_2 + 10.5 \ H_2O \ /tobermorite/$$

The technical properties of the material depend on the degree of the transition of $CaO$ and $SiO_2$ into the new mineral form, but apart from the quantity of the newly formed tobermorite phase, the properties of the material are also influenced by the form and size of the crystals in the new phase, its distribution in the product, as well as the overall microstructure of the obtained material. In order to achieve continuity of the chemical reaction for the production of calcium hydrosilicate out of the solution, it is necessary to have a liquid phase provided with sufficient quantities of Ca and $SiO_2$ ions, at all times, as well as with such quantities of energy necessary for creating the new mineral phase.

As the mechanism of the reaction for the formation of calcium hydrosilicate, tobermorite lacks clarity from a theoretical point of view. However, one thing is certain, namely, that it is possible to prove by this process that the formation of tobermorite runs directly, and that the state of the formed phase may range from amorphous to exceptionally fine crystalline. It has also been shown that the micro shape of the crystal may be in the form of sheets or fibers arranged in a radial or uneven crossed pattern. The mobility of the liquid phase in the synthesis period seems to be very important, as well as the fact that it always contains Ca and $SiO_2$ ions, capable of bonding and remaining bonded. The role and quantity of the liquid phase becomes crucial, and the texture of the material is in function of the microstructure of the new phase, of pore size and distribution. These are only the basic parameters effecting the establishment of technical properties of the material, and it is probable that in this process, not all the inter-relation between the process parameters and the quality of the synthesis of the new material have been detected.

The organic fibers that may be used in the process are of cellulose composition, approximately 5 mm long.

Among the inorganic fibers chrisotile asbestos with 6 mm long fibers, may be used. Furthermore, medium class vermiculite may be used and all other mineral fibers showing resistance in an alkaline medium at a temperature of 200 °C.

The material according to the invention has a wide range of applications, which proves that it incorporates a number of necessary properties, which make it fit to be built into various places in which calcium hydrosilicate material had never before been used:

As the surface layer of industrial plant hearths in which light fuel oil, propane-butane gas and natural gas are burnt. As a protective coating of steel constructions.

However, with the appearance of the calcium hydrosilicate, produced in accordance with YU pat. application no. P-553/85, the requirements set by consumers regarding their desire to have a calcium hydrosilicate material with improved mechanical properties were defined more clearly then ever.

The new type of calcium hydrosilicate with tobermorite having an A-axis of 1.13 nm (11.3 Å), according to the invention /Vidasil 400/, fulfills all the strictest requirements for fire resistant materials built into housing constructions, public buildings and public transportation means.

The technical properties of this new type of calcium hydrosilicate, Vidasil 400, will help solve problems related to protection against natural electromagnetic radiation. The electrical resistance of this material goes up to 200,000 MΩ for 10 mm thick plates.

Its properties of not conducting heat and not burning, of enduring direct contact with molten metals and hot gases, provide excellent possibilities and widespread applications. This also justifies the belief that through different production processes, raw materials $CaO$ and $SiO_2$, may serve for the manufacturing of materials with a very wide spectrum of technical possibilities.

## Example 1

1.6 kg of hydrated lime containing 72 wt % of CaO and 1.632 kg of quartz powder with 96 wt % of $SiO_2$, and having a particle size of below 63 microns, were successively added to 9 liters of water containing 12 g of natrium carboxylcellulose. To this suspension, a mixture of 4 liters of water and 161 g of 4 mm long cellulose fibers was added. The mixed components were poured into a die dimensioned 0.6 x 0.2 x 0.2 m. The die containing the pulp was subject to saturated water vapor pressure of 11.0 - 12.5 bars, over a period of 18 hours. After the die had cooled, a block with a moisture content of approximately 67 mass % was removed from the die, and air-dried at a temperature of approximately 100°C.

## Example 2

557.6 kg of calcium hydroxide containing 72 wt % of CaO and 565.8 kg of quartz powder containing 98 wt % of $SiO_2$, were successively added to 2600 liters of water, in which 5.3 kg of natrium carboxylcellulose had been dissolved. Into the obtained suspension, 1560 liters of water containing 56.13 kg of 5 mm long cellulose fibers was added. After thorough mixing, the pulp was poured into dies, which were then exposed to a pressure of 11.5 - 12.5 bars, over a period of 14 hours. After cooling, blocks having a moisture content of approximately 67 wt % were removed from the dies and air-dried at a temperature of 200 °C. Technical properties of the material for heat and electrical insulation according to the invention /Vidasil-400/ are as follow:

SHAPE: Flat plates and pipe profiles
DENSITY: At room temperature 400 kg/m$^3$
BORDER TEMPERATURE OF APPLICATION IN CONDITIONS OF LONG EXPLOITATION IS 1000 °C
RAY DIFFRACTION ANALYSES: 1 Tobermorite 2 Quartz
THERMAL CONDUCTIVITY FOLLOWING THERMAL TREATMENT AT 900 °C

| Temperature °C | | | Thermal Conductivity W/mK |
|---|---|---|---|
| Hot Face | Cold Face | Mean | |
| 201 | 27 | 114 | 0.118 |
| 400 | 41 | 220 | 0.127 |
| 800 | 91 | 448 | 0.166 |

SPECIFIC HEAT

Mean temperature °C  65,209,320,427,483
Specific heat J/kgK     721,771,866,894,928,947

PRESSURE RESISTANCE

| T °C | At 5% deformation MPa | To maximum destruction MPa |
|---|---|---|
| room | 3.28 | 4.30 |
| over 900 °C | 2.42 | 4.57 |

BENDING RESISTANCE

| Temperature °C | MPa | PSi |
|---|---|---|
| room | 1.48 | 215 |
| over 900 | 0.61 | 88 |

RESISTANCE TO BOLT DRAWING

| Temperature °C | Max Load /kg/ | Max Load /kg/ |
|---|---|---|
| room | 32.7 | 0.32 |
| over 900 | 30.4 | 0,3 |

THERMAL SHOCK RESISTANCE

The material when annealed at a temperature of 1100 °C "survived" a quench test in cold water. This test was carried out in order to obtain good quality results.

DETERMINATION OF THERMAL SHOCK RESISTANCE PARAMETER Rst

The Rst parameter value of 44.80 m$^{1/2}$ was obtained for material treated at 900 °C

ELECTRICAL RESISTANCE M$\Omega$

| Plate width | 0.5 mm | 20 |
|---|---|---|
| Plate width | 10 mm | 200,000 |

MODULUS OF ELASTICITY

| Temperature °C | GPa | PSi |
|---|---|---|
| room | 1.57 | 227650 |
| over 900 | 0,74 | 107300 |

SHRINKAGE AFTER 24 HOUR HEATING

| Temperature °C | Shrinkage | | |
|---|---|---|---|
| | Length | Width | Thickness |
| 600 | 1.40 | 1.97 | 0.94 |
| 800 | 3.43 | 2.89 | 2.55 |

TOTAL OPEN POROSITY: 80 %

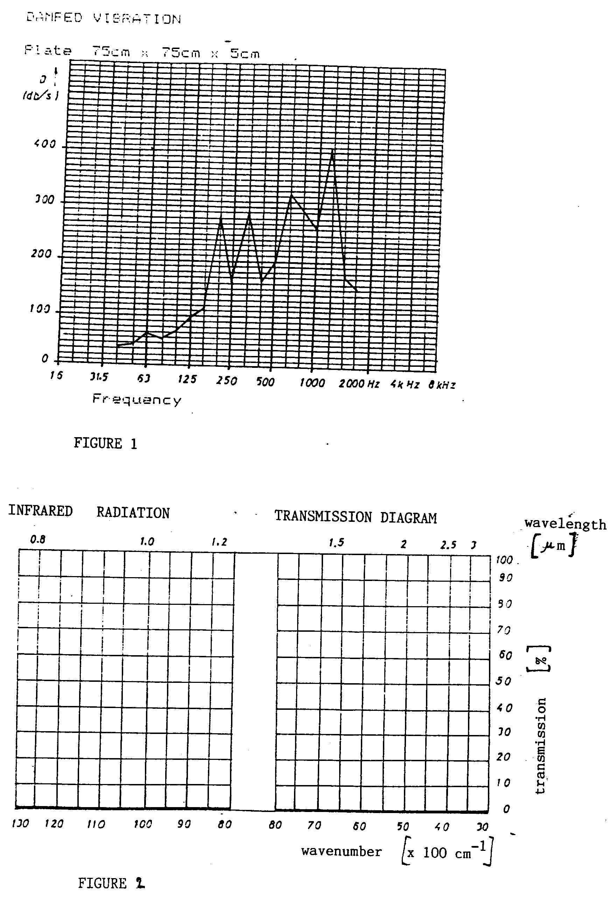

/figure 1/ on the vibration damping characteristics and
/figure 2/ on the infrared radiation transmission spectrum are presented

**Claims**

1. Material for electrical and heat insulation with a capacity of selective absorption of the electromagnetic spectrum of radiation, said material being water resistant, resistant to acids, molten metals and temperatures not below -180°C, having a great mechanical strength and being based on calcium hydrosilicate tobermorite having an A-axis of 1.13 nm (11.3 Å),
**characterized in**

   a) that said material comprises 90 wt% of calcium hydrosilicate tobermorit showing a coral like microstructure form;

   b) that said material shows selective absorption of vibrations;

   c) that said material has a volume density of approximately 400 kg/m$^3$,

   d) a thermal conductivity of approximately 0.11 - 0.16 W/mK,

   e) a pressure resistance of approximately 3.2 MPa,

   f) a linear shrinkage after 24 hour heating at 1273.15 K of max. 3.5%,

   g) a thermal shock resistance of 26,

   h) a bending resistance of approximately 1.48 MPa,

   i) a modulus of elasticity of approximately 1.57 GPa,

   j) a resistance to bolt drawing approximately of 32 kg,

   k) an electrical resistance of sample plates (10 mm thick) of approximately 200,000 MΩ;

   l) that said material absorbs the electromagnetic radiation spectrum in the wavelenght range of 0.8-3 microns; and that it is obtainable by:

   m) providing hydrated lime and quartz powder containing a minimum of 96 wt % of $SiO_2$, the $CaO:SiO_2$ weight ratio being 0.60 - 0.735;

   n) adding the hydrated lime and quartz powder successively to water, in which, in relation to the solid phase, 0.3 - 0.45 wt % of sodium carboxyl methyl cellulose is dissolved;

   o) adding to this suspension a mixture of water and 3.5 - 5.5 wt % of fibers of organic or inorganic origin in relation to the solid phase so that the ratio liquid / solid phase is 2.9 - 4;

   p) mixing the components;

   q) pouring the obtained pulp into dies;

   r) exposing these dies to saturated water vapor pressure of over 11.0 - 12.5 bars for a duration of 14 - 28 hours;

   s) removing the hard molded material from the dies and air-drying it at a temperature of up to 250°C.

2. Material according to claim 1, wherein during the production NaOH was added to the pulp received after step p) in a quantity of 0.02 wt % in relation to $SiO_2$.

3. Material according to claim 1 or 2, wherein the organic fibers are based on cellulose / paper, flax, hemp, length of fiber approximately 5 mm.

4. Material according to claim 1 or 2, wherein the inorganic fibers are chrisotile asbestos, length of fiber 6 mm, or vermiculite, size of sheets approximately 5 mm.

5. Process for the production of the material of claim 1 for electrical and heat insulation with the capacity of selective absorption of the electromagnetic spectrum of radiation and vibration, said material being water resistant, resistant to acids, molten metals and temperatures not below -180°C, having a great mechanical strength and being based on calcium hydrosilicate tobermorite having an A-axis of 1.13 nm (11.3 Å),
said process comprising the following steps:

a) successively adding hydrated lime and quartz powder containing a minimum of 96.0 wt% of $SiO_2$, the $CaO:SiO_2$ weight ratio being 0.60-0,735, to water, in which, in relation to the solid phase, 0.3 - 0,45 wt% of natrium carboxylmethyl cellulose is dissolved;

b) adding to this suspension a mixture of water and 3.5 - 5.5 wt% of fibers in relation to the solid phase, so that the ratio liquid/solid phase is 2.9 - 4,

c) adding NaOH to the pulp in a quantity of 0.02 wt% in relation to $SiO_2$,

d) mixing the components,

e) pouring the obtained pulp into dies

f) exposing the dies to saturated water vapor at a pressure of 11.0 - 12.5 bars for a duration of 14 - 28 hours; and

g) removing the hard molded material from the dies and air drying them at a temperature of up to 250°C.

6. Process according to claim 5, wherein the organic fibers are based on cellulose/paper, flax, hemp, with a length of the fibers of approximately 5 mm.

7. Process according to claim 5, wherein the inorganic fibers are chrisotile asbestos, length of fiber approximately 5 mm, or vermiculite, size of sheets approximately 5 mm.

8. Products containing the materials according to claim 1 to 4 or containing materials produced by any of the processes according to claims 5 to 7.

9. Use of products according to claim 8, wherein said products are applied

- as construction material for heat insulation;

- as insulation against vibrations;

- as insulation against sound;

- as insulation against undesirable natural radiation;

- as protection against fire in buildings, ships, airplanes, underground railways, waggons, rail-guided and land-vehicles, in the chemical and metal industry;

- for the lining of thermal installations, for the production of burners, for hot gas pipes;

- as insulation of steam conduits, of industrial furnaces, for aluminium casting runners;

- for the manufacturing of cells for casting;

- in the refrigeration technique industry; or

- in other installations requiring good insulation properties and appropriate mechanical strength.

**Patentansprüche**

1.  Material fuer elektrisch und Waermeisolierung mit der Eigenschaft, das Radiationsspektrum selektiv zu absorbieren, wobei dieses Material eine Festigkeit gegenüber Wasser, Saeuren, geschmolzene Metallen und Temperaturen ueber -180°C sowie eine grosse mechanische Festigkeit aufzeigt, auf Calcium-Hydrosilicat-Tobermorit basiert und die A-Achse von 1,13nm (11.3Å) hat,
    dadurch gekennzeichnet, dass

    a) das angegebene Material 90 Gewichtsprozent von Calcium-Hydrosilikat-Tobermorit mit einer Korallen-aehnlichen Mikrostruktur enthaelt;
    b) das angegebene Material eine selektive Absorption der Vibrationen bewirkt;
    c) das angegebene Material eine Volumendichte von ungefaehr 400 kg/m$^3$ hat;
    d) eine Waermeleitfaehigkeit von ungefaehr 0,11-0,16 W/mK hat;
    e) eine Druckfestigkeit von ungefaehr 3,2 MPa hat;
    f) nach 24 Stunden Erhitzung auf 1273,15 K eine lineare Schrumpfung von maximal 3,5% aufzeigt;
    g) eine Festigkeit auf termischen Schock von 26 hat;
    h) eine Biegefestigkeit von ungefaehr 1,48 MPa hat;
    i) einen Elastizitaetsmodul von 1,57 GPa hat,
    j) eine Schraubentragfaehigkeit von ungefaehr 32kg hat;
    k) einen elektrischen Wiederstand von Probeplaettchen (10mm dick) von ungefaehr 200.000MΩ aufzeigt;
    l) das angegebene Material das elektromagnetische Radiationsspektrum der Wellenlaengen zwischen 0,8 und 3 Mikronen absorbiert; und
    das auf folgende Weise erhaeltlich ist:
    m) Kalkhydrat und Quarzpulver erhaltend ein Minimum von 96 Gewichtsprozent von SiO$_2$ werden bereitgemacht, wobei CaO zu SiO$_2$ im Verhaeltnis 0,60 zu 0,735 steht;
    n) Kalkhydrat und Quarzpulver werden hintereineander ins Wasser gegeben, in welchem, im Verhaeltnis zur festen Phase, 0,3 - 0,45 Gewichtsprozent von Natrium-Carboxyl-Methyl-Zellulose aufgeloest ist;
    o) zu dieser Suspension eine Mischung von Wasser und 3,5 - 5,5 Gewichtsprozent von Fasern organischen oder inorganischen Ursprungs im Verhaeltnis zur festen Phase gegeben wird, so dass das Verhaeltnis der Fluessigkeit zur festen Phase 2,9 zu 4 betraegt;
    p) die Komponenten werden gemischt;
    q) die gewonnene Brei wird in Formen gegossen;
    r) die Formen werden 14 - 28 Stunden einem Druck von gesaettigtem Wasserdampf von ueber 11,0 - 12,5 Bar ausgesetzt;
    s) das hart geformte Material wird aus den Formen genommen und bei Temperaturen bis 250°C luft-getrocknet.

2.  Material nach Anspruch 1, wobei waehrend des Herstellungsverfahrens NaOH in der Menge von 0,02 Gewichtsprozent im Verhaeltnis zu SiO$_2$ in den Brei, der nach Stufe (p) erhalten wurde, hinzugetan wird.

3.  Material nach Anspruch 1 oder 2, wobei die organischen Fasern auf Zellulose/ Papier, Flachs oder Hanf basieren und eine Faserlaenge von ungefaehr 5mm haben.

4.  Material nach Anspruch 1 oder 2, wobei die inorganischen Fasern aus Serpentinasbest der Faserlaenge 6mm sind, oder aus Vermiculit deren Plaettchengroesse ungefaehr 5mm ist.

5.  Verfahren fuer die Herstellung des Materials nach Anspruch 1 fuer elektrische und Waermeisolierung mit der Eigenschaft das Radiationsspektrum selektiv zu absorbieren, wobei dieses Material eine Festigkeit auf Wasser, Saeuren, geschmolzene Metallen und Temperaturen ueber -180°C sowie eine grosse mechanische Festigkeit aufzeigt, auf Calcium-Hydrosilicat-Tobermorit basiert und die A-Achse von 1,13nm (11.3Å) hat,
    gekennzeichnet dadurch, dass es die folgenden Schritte umfasst:

    a) Kalkhydrat und Quarzpulver enthaltend ein Minimum von 96 Gewichtsprozent von SiO$_2$, wobei CaO:SiO$_2$ Verhaeltnis 0,60 zu 0,735 ist, werden hinterein ander in Wasser gegeben, in welchem, im Verhaeltnis zur festen Phase, 0,3 - 0,45 Gewichtsprozent von Natrium-Carboxyl-Methyl-Zellulose aufgeloest ist;
    b) zu dieser Suspension eine Mischung von Wasser und 3,5 - 5,5 Gewichtsprozent von Fasern im Verhaeltniss zur festen Phase gegeben wird, so dass das Verhaeltnis der Fluessigkeit zur festen Phase 2,9 zu 4 betraegt;
    c) NaOH wird in einer Menge von 0,02 Gewichtsprozent im Verhaeltnis zu SiO$_2$ in den Brei hinzugegeben;

d) die Komponenten werden gemischt;

e) der gewonnene Brei wird in Formen gegossen;
f) die Formen werden 14 - 28 Stunden einem Druck von gesaettigtem Wasserdampf von ueber 11,0 - 12,5 Bar ausgesetzt;
g) das hart geformte Material wird aus den Formen genommen und an Temperaturen bis 250°C luft-getrocknet.

6. Verfahren nach Anspruch 5, wobei die organischen Fasern auf Zellulose/ Papier, Flachs oder Hanf basieren und eine Faserlaenge von ungefaehr 5mm haben.

7. Verfahren nach Anspruch 5 wobei die inorganischen Fasern aus Serpentinasbest der Faserlaenge 6mm sind, oder aus Vermiculit deren Plaettchengroesse ungefaehr 5mm ist.

8. Produkte, die Materialien flach Anspruch 1 bis 4 enthalten, oder Produkte, die Materialien enthalten, die nach einem der Verfahren nach Anspruch 5 bis 7 hergestellt sind.

9. Verwendung der Produkte nach Anspruch 8, wobei diese Produkte fur folgendes verwendet werden:

- als Konstruktionsmaterial fuer Waermeisolierung;
- als Isolierung gegen Vibrationen;
- als Isolierung gegen Schall;
- als Isolierung gegen unerwuenschte natuerliche-Strahlung;
- als Schutz gegen Feuer in Bauwerken, Schiffen, Flugzeugen, Untergrundbahnen, Eisenbahnwaegen, bahngesteuerten- und Strassenfahzeugen, in der chemischen und Metallindustrie;
- als Futter fuer thermische Installationen, fuer die Herstellung von Brennern, fuer Heissgasleitungen;
- als Isolierung fuer Dampfleitungsroehren, fuer Industrie-Brennoefen, fuer Ablaufkanaele beim Giessen von Aluminium;
- fuer die Herstellung von Giesszellen;
- in der Industrie der Kuehlungstechnik, oder
- in anderen Installationen, die guter Isolationsfaehigkeiten und entsprechender mechanischer Festigkeit beduerfen.

**Revendications**

1. Le materiau pour l'isolation electrique et thermique avec capacite d'absorbtion selective du spectre electromagnetique de radiation et de vibrations, ledit materiau etant resistant a l'eau, aux acides, aux metaux fondus, et aux temperatures qui ne sont pas inferieures a -180$x$C, possede une grande force mecanique et est a base d' hydrosilicate de calcium tobermorite, qui a un axe de 1,13 nm (11,3 A).
Caracteristiques et procedes:

a) Ledit materiau contient 90% de poids du hydrosilicate de calcium tobermorite dont la microstructure apparait sous forme de corail;
b) ledit materiau montre une capacite d'absorbtion selective des vibrations;
c) ledit materiau a une densite approximative de volume de 4OO kg/m3
d) la conductibilite thermique est de 0,11 - 0,16 W/mk approximativement
e) resistance a la pression 3,2 Mpa approximativement
f) contraction lineaire au bout de 24 heures d'echauffement a 1273,15 K avec max.3,5%,
g) resistance aux chocs thermiques 26,
h) resistance au pliage 1,48 MPa approximativement,
i) module d'elastlcite 1,57 GPa approximativement,
j) resistance a l'extraction de boulon 32 kg. approximativement,
k) resistance electrique de la dalle echantillon (1O mm d'epaisseur) 2OO OOO M omega approximativement,
l) ledit materiau a la capacite d'absorber le spectre de radiation electromagnetique pour les longueurs d'ondes de O,8 - 3,O microns; et on peut obtenir ce resultat:
m) en se servant de chaux hydratee et de poudre de quartz contenant 96% de poids de SiO2, le rapport de poids etant Cao : SiO2 0,6o - 0,735,
n) en ajoutant successivement de la chaux hydratee et de la poudre de quartz a l'eau, dans laquelle est dissout 0,3 - 0,45 % de poids de sodium carboxylmethyle de cellulose,

10

o) en ajoutant a cette solution un melange d'eau avec 3,5 - 5,5% du poids des fibres organiques et non organiques par rapport a la phase solide de facon a ce que le rapport entre la phase liquide et la phase solide soit 2,9-4,

p) en melangeant les elements

q) en versant la pulpe obtenue dans les moules

r) en exposant ces mou les a la vapeur d'eau saturee sous la pression de 11,0 - 12,5 bars pour une duree de 14 - 28 heures,

s) en extrayant du moule le materiau solide et faconne et en le sechant par radiation a une temperature de 250$x$C.

2. Le materiau de l'exigence 1, auquel pendant la production or a ajoute du NaOH dans la pulpe apres la phase p) et ceci dans la proportion de 0,02% de poids par rapport au SiO2.

3. Le materiau de l'exigence 1 ou 2, ou figurent des fibres organiques sur la base de cellulose/papier, lin, chanvre, longueur de fibres approx. 5 mm.

4. Le materiau de l'exigence 1 ou 2, ou figurent des fibres non organiques chrysotile asbeste, longueur des fibres 6 mm, ou vermiculite, dimmension des lamelles 5 mm approx.

5. Procede de production du materiau selon l'exigence 1 pour isolation electrique et thermique avec la capacite d'absorbtion selective du spectre de radiations electromagnetiques et de vibrations, ledit materiau est resistant a l'eau, a l'acide, aux metaux fondus et a des temperatures qui ne sont pas inferieures a - 180$x$ C, possede une grande force mecanique, et a pour base l' hydrosilicate de calcium tobermorite ayant comme distance d'axe 1,13 nm (11.3 A).

Ledit procede contient les phases suivantes:

a) la chaux hydratee et la poudre de quart, contenant 96% de poids de SiO2 dans une proportion de poids CaO:SO2 0,60 - 0,735, sont ajoutees successivement dans l'eau dans laquelle est dissout 0,3 - 0,45% de poids de natrium carboxyle methyle de cellulose, par rapport a la phase solide,

b) ajouter dans cette solution le melange d'eau et de 3,5 - 5,5% de poids de fibres par raport a la phase solide, de facon que le rapport de la phase liquide/phase solide soit 2,9 - 4,

C) ajouter a la pulpe du NaOH dans la quantite de 0,02% de poids par rapport a SiO2,

d) melanger les composants,

e) verser la pulpe obtenue dans les moules,

f) soumettre les moules a la vapeur saturee d'une pression de 11,5 - 12,5 bars pour une duree de 14-28 heures; et

g) sortir des moules le materiau solide et faconne et le secher par radiation a la temperature de 250%C.

6. Le procede selon l'exigence 5, ou les fibres organiques se basent sur la cellulose/papier, lin, chanvre, avec la longueur des fibres de 5 mm approx.

7. Le procede selon l' exigence 5,dans lequel la fibre non organique est le chrysotile asbeste,la longueur des fibres etant de 5 mm, ou le vermiculite, la grandeur des lamelles etant de 5 mm approximativement.

8. Les produits contenant les materiaux d'apres les exigences 1 - 4,ou contenant les materiaux produits selon un des procedes d'apres les exigences 5 - 7.

9. L'usage des produits d'apres l exigence 8 ou lesdits produits sont appliques
   - comme materiau de construction pour isolation thermique:

   - comme materiau pour isolation des vibrations;
   - comme materiau pour isolation des sons;
   - comme isolation de radiation naturelle indesiree;
   - comme protection contre les incendies des batiments,bateaux,avions,metros,wagons, voitures routieres et ferroviaires,dans l' industrie chimique et metallurgique;
   - pour l'emmurement d agregats thermiques,pour la production de bruleurs, pour les canalisations de gaz brulants de fumees,
   - pour l'isolation thermique des conduits de vapeur, des chaudieres industrielles, pour l'ecoulement de l'aluminium en fusion

- pour la production des cuves de fonderies;
- dans l'industrie des appareils de refroidissement; ou
- dans d' autres installations ou sont exigees de bonnes proprietes d'isolation et la solidite mecanique correspondante.

DAMPED VIBRATION

Plate 75cm x 75cm x 5cm

FIGURE 1

INFRARED RADIATION    TRANSMISSION DIAGRAM

FIGURE 2